# EUROPEAN PATENT SPECIFICATION

(11) **EP 3 974 679 B1**
(45) Date of publication and mention of the grant of the patent: **01.05.2024**
(21) Application number: 20382853.8
(22) Date of filing: 28.09.2020
(51) Int. Cl.: F16H 25/22

(54) **MECHANICAL ACTUATOR**
MECHANISCHE BETÄTIGUNGSVORRICHTUNG
ACTIONNEUR MÉCANIQUE

(43) Date of publication of application: 30.03.2022
(73) Proprietor: Cie Automotive, S.A., 48009 Bilbao (Bizkaia) (ES)
(72) Inventor: AZKARATE RETOLAZA, Ander, 48009 BILBAO (Bizkaia) (ES); IRISARRI OCARANZA, Néstor, 48009 BILBAO (Bizkaia) (ES)
(74) Representative: Herrero & Asociados, S.L.

(56) References cited:
- EP-A1- 2 050 583
- EP-B1- 2 050 583
- WO-A1-2010/123034
- JP-A- 2007 333 125

## Description

The present invention refers to mechanical actuators comprising ball nuts and bearings and a process of manufacturing of mechanical actuators.

### Background of the invention

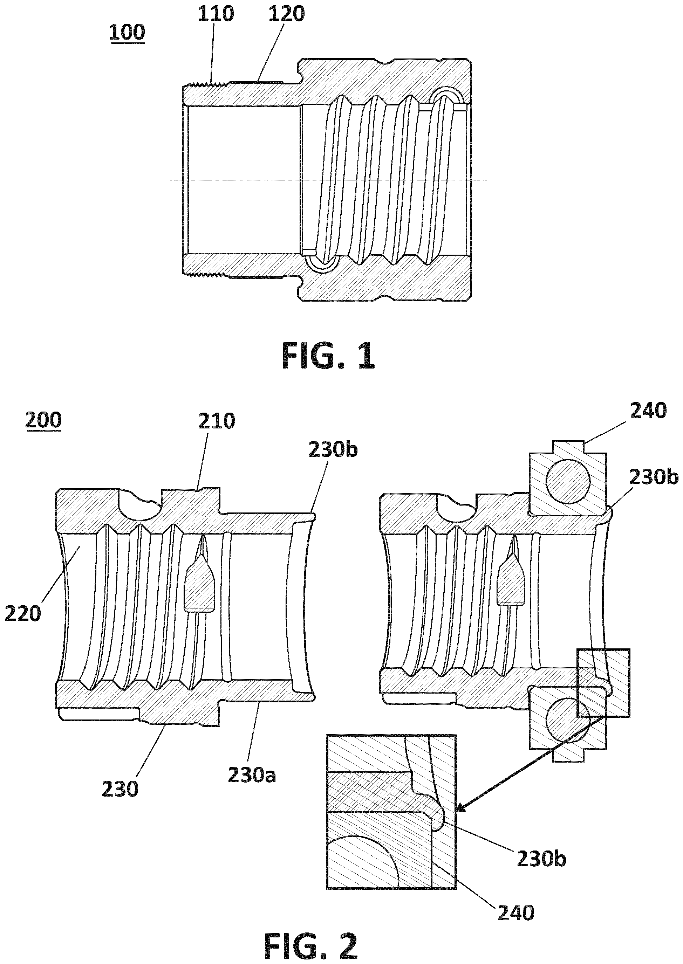

Conventional ball nuts (100) as shown in figure 1 comprise fixing means in the outer part of the ball nut (100) to permit the fixation of a bearing (not shown) adapted to be fixed to an outer surface (120) of the ball nut. The fixing means normally comprise a nut for a threaded surface (110) formed on the outer part of the ball nut (100).

The use of a nut as fixing means in ball nuts is a space consuming technique that increases the manufacturing cost, time and complexity.

The present invention aims to solve at least the aforementioned limitations given by the use of nuts as fixing means in ball nuts.

JP2007333125A describes a ball screw supporting structure which further facilitates assembling and enhances strength and reliability. Such a document shows a mechanical actuator for vehicles, comprising a ball nut comprising an inner part defining a ball track, a malleable outer part comprising a riveting area with an edge and a bearing fixed on the riveting area of the outer part of the ball nut.

### Description of the invention

The present invention relates to a mechanical actuator for the automotive industry. The mechanical actuator comprises a ball nut that does not require the use of a nut as fixing means for fixing a bearing. Consequently, a threaded surface suitable for receiving a nut and located on the outer part of the ball nut is not required anymore and hence, the manufacturing process of the ball nut is eased and accelerated, and the material cost is reduced.

In a first aspect, the present invention relates to a mechanical actuator for vehicles. The mechanical actuator comprises a ball nut. The ball nut comprises a hardened inner part that defines a ball track for allocating a rack and recirculating balls acting as a bearing. Furthermore, the ball nut comprises a malleable outer part comprising a riveting area with a riveting edge. The mechanical actuator further comprises a bearing riveted with the riveting edge to the riveting area of the outer part of the ball nut.

In some examples, the mechanical actuator further comprises a rack and a plurality of balls for the ball track allocated in the inner part of the ball nut.

In a second aspect, the present invention relates to a manufacturing process of a mechanical actuator for vehicles, the process comprises obtaining a ball nut comprising an inner part defining a ball track and a malleable outer part comprising a riveting area with a riveting edge. The process comprises performing induction hardening of the inner part of the ball nut to obtain a hardened inner part. The process further comprises riveting a bearing with the riveting edge to the riveting area of the outer part of the ball nut to obtain the mechanical actuator.

### Brief description of the drawings

For a better understanding the above explanation and for the sole purpose of providing an example, some non-limiting drawings are included that schematically depict a practical embodiment.
Figure 1 shows a conventional ball nut.
Figures 2 and 3 show a section of an example of mechanical actuator according to the present invention.
Figure 4 and 5 show an example of a mechanical actuator according to the present invention.

### Description of a preferred embodiment

Figure 2 shows and example of a mechanical actuator (200) for vehicles according to the present invention.

The mechanical actuator comprises a ball nut (210) which comprises a hardened inner part (220) that defines a ball track. In this example, the material of the ball nut (210) is carbon steel. Other materials can be used in further examples. The inner part (220) is hardened by performing induction hardening. Hardening is needed for the structure requirements of the inner part (200), where circulating balls are acting as a bearing for a rack adapted to be allocated in the inner part (200) of the ball nut (210). Induction hardening permits a hardening of selected parts of the ball nut (210) while keeping other parts unhardened and hence, more malleable and ductile.

Furthermore, the ball nut (210) comprises a malleable outer part (230). The malleable outer part (230) comprises a riveting area (230a) with a riveting edge (230b). As mentioned, the induction hardening is only performed to the inner part (220) of the ball nut (210) so the outer part (230) having the riveting area (230a) and the riveting edge (230b) remains ductile, and hence; as shown in the zoom of figure 2, a riveting of the bearing (240) with the riveting edge (230b) can be easily carried out without resulting in cracks.

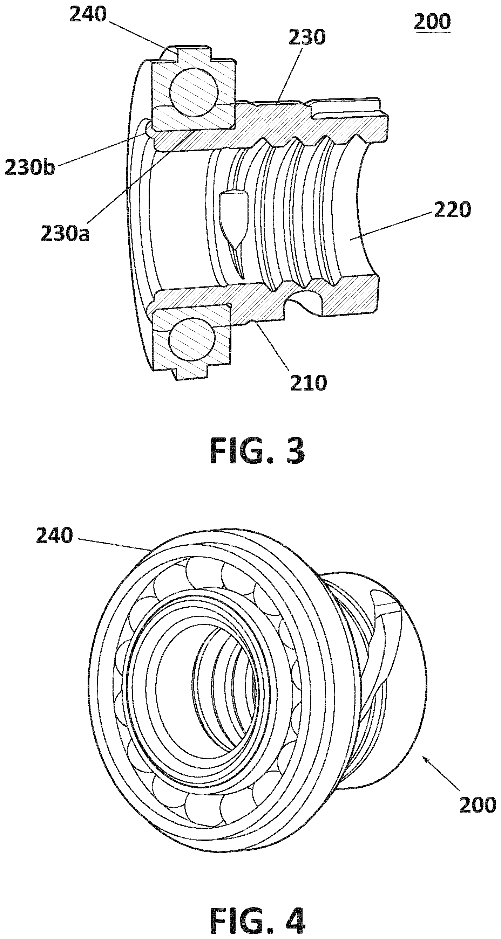

As shown in figure 2, the bearing (240) (having bearing balls shown in figure 4) is riveted with the riveting edge (230b) to the riveting area (230a) of the outer part (230) of the ball nut (210). As previously mentioned, for this riveting to be possible, the ball nut outer part (230) material needs not to be hardened and remain ductile. The riveting of the bearing (240) as a fixation procedure permits avoiding the use of conventional fixation means as nuts. As mentioned, the threaded surface for a nut on the outer part of the ball nut is not required anymore. Consequently, the manufacturing process is eased and accelerated and the outer part (230) surface of the ball nut (210) is decreased permitting a material cost reduction.

Figure 3 shows another section of the mechanical actuator (200) comprising the ball nut (210) and the bearing (240) fixed to the ball nut (210) by riveting said bearing (240) with the riveting edge (230b) to the riveting area (230a) of the outer part of the ball nut (210). As shown in figure 3, the bearing (240) comprises a circular track for bearing balls that are shown in figure 4.

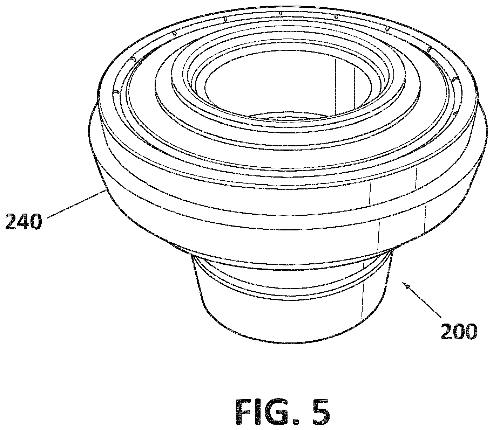

Figure 4 shows a first view of the mechanical actuator (200) showing the bearing (240) comprising a circular track with bearing balls. Figure 5 shows another view of the mechanical actuator (200) with the bearing (240) riveted to the ball nut (210).

Furthermore, in further examples not shown, the mechanical actuator (200) comprise in the inner part (220) a rack and a plurality of balls for the ball track of the hardened inner part wherein induction hardening is performed.

## Claims

1. A mechanical actuator (200) for vehicles, comprising:
- a ball nut (210) comprising:
a hardened inner part (220) defining a ball track;
a malleable outer part (230) comprising a riveting area (230a) with a riveting edge (230b) that comprises a continuous riveting; and
- a bearing (240) riveted with the riveting edge (230b) to the riveting area (230a) of the outer part (230) of the ball nut (210).

2. The mechanical actuator (200) according to claim 1, wherein the ball nut (210) comprises carbon steel.

3. The mechanical actuator (200) according to claims 1 or 2, further comprising:
- a rack; and
- a plurality of balls for the ball track.

4. A manufacturing process of the mechanical actuator (200) for vehicles according to claims 1 to 3, the process comprising:
- obtaining a ball nut (210) comprising an inner part defining a ball track and a malleable outer part (230) comprising a riveting area (230a) with a riveting edge (230b) that comprises a continuous riveting;
- performing induction hardening of the inner part to obtain a hardened inner part (220); and
- riveting a bearing with the riveting edge (230b) to the riveting area (230a) of the outer part of the ball nut (210) to obtain the mechanical actuator.

## Patentansprüche

1. Mechanische Betätigungsvorrichtung (200) für Fahrzeuge, aufweisend:
- eine Kugelmutter (210), die aufweist:
• einen gehärteten inneren Abschnitt (220), der eine Kugelbahn definiert;
• einen verformbaren äußeren Abschnitt (230), der einen Nietbereich (230a) mit einem Nietrand (230b) aufweist, der eine durchgehende Nietung zeigt; und
- ein Lager (240), das mittels des Nietrands (230b) mit dem Nietbereich (230a) des äußeren Abschnitts (230) der Kugelmutter (210) vernietet ist.

2. Mechanische Betätigungsvorrichtung (200) nach Anspruch 1, wobei die Kugelmutter (210) kohlenstoffhaltigen Stahl aufweist.

3. Mechanische Betätigungsvorrichtung (200) nach Anspruch 1 oder 2, die weiterhin aufweist:
- ein Gestell; und
- eine Vielzahl von Kugeln für die Kugelbahn.

4. Herstellverfahren für die mechanische Betätigungsvorrichtung (200) für Fahrzeuge nach einem der Ansprüche 1 bis 3, wobei das Verfahren aufweist:
- Herstellen einer Kugelmutter (210), die einen inneren Abschnitt, der eine Kugelbahn definiert und einen verformbaren äußeren Abschnitt (230) aufweist, der einen Nietbereich (230a) mit einem Nietrand (230b) aufweist, der eine durchgehende Nietung zeigt;
- Induktionshärten des inneren Abschnitts, um einen gehärteten inneren Abschnitt (220) zu erhalten; und
- Vernieten eines Lagers mit dem Nietrand (230b) mit dem Nietbereich (230a) des äußeren Abschnitt der Kugelmutter (210), um die mechanische Betätigungsvorrichtung zu erhalten.

## Revendications

1. Actionneur mécanique (200) pour véhicules, comprenant :
- un écrou à billes (210) comprenant :
une partie intérieure durcie (220) définissant un chemin de billes ;
une partie extérieure malléable (230) comprenant une zone de rivetage (230a) avec un bord de rivetage (230b) qui comprend un rivetage continu ; et
- un palier (240) riveté avec le bord de rivetage (230b) à la zone de rivetage (230a) de la partie extérieure (230) de l'écrou à billes (210).

2. Actionneur mécanique (200) selon la revendication 1, dans lequel l'écrou à billes (210) comprend de l'acier au carbone.

3. Actionneur mécanique (200) selon la revendication 1 ou 2, comprenant en outre :
- une crémaillère ; et
- une pluralité de billes pour le chemin de billes.

4. Procédé de fabrication de l'actionneur mécanique (200) pour véhicules selon l'une des revendications 1 à 3, le procédé comprenant :
- l'obtention d'un écrou à billes (210) comprenant une partie intérieure définissant un chemin de billes et une partie extérieure malléable (230) comprenant une zone de rivetage (230a) avec un bord de rivetage (230b) qui comprend un rivetage continu ;
- la réalisation d'un durcissement par induction de la partie intérieure pour obtenir une partie intérieure durcie (220) ; et
- le rivetage d'un palier avec le bord de rivetage (230b) à la zone de rivetage (230a) de la partie extérieure de l'écrou à billes (210) pour obtenir l'actionneur mécanique.
